# EUROPEAN PATENT SPECIFICATION

(11) **EP 0 841 437 B1**
(45) Date of publication and mention of the grant of the patent: **09.04.2003**
(21) Application number: 97119066.5
(22) Date of filing: 31.10.1997
(51) Int. Cl.: E02F 9/16

(54) **Rotating dashboard and driver post unit, particularly for bidirectional earth-movers**
Drehende Armaturenbrett- und Fahrerstandeinheit, insbesondere für Zweirichtungserdbewegungsmaschinen
Ensemble, tableau de bord et poste de conduite tournant, en particulier pour machines de chantier bi-directionnelles

(30) Priority: 08.11.1996 IT PD960272
(43) Date of publication of application: 13.05.1998
(73) Proprietor: ANTONIO CARRARO S.p.A., 35011 Campodarsego (Padova) (IT)
(72) Inventor: Martignon, Girolamo, 35010 Borgoricco (IT)
(74) Representative: Modiano, Guido, Dr.-Ing.

(56) References cited:
- AU-A- 5 297 790
- DE-A- 2 113 770
- FR-A- 2 026 985
- GB-A- 1 206 030
- US-A- 3 347 558
- US-A- 3 357 513
- US-A- 4 059 171
- US-A- 4 278 144
- US-A- 5 346 035
- PATENT ABSTRACTS OF JAPAN vol. 016, no. 578 (M-1346), 17 December 1992 -& JP 04 228337 A (ISEKI & CO LTD;OTHERS: 01), 18 August 1992,

## Description

The present invention relates to a rotating dashboard and driver post unit, particularly suitable for bidirectional earth-movers.

Bidirectional earth-movers have long been used and are applied in various fields, such as for example agriculture, earth-moving in building yards, etcetera.

The main feature of these earth-movers is that they can travel and work equally and alternately in both directions along their longitudinal axis.

These bidirectional earth-movers are generally appreciated indeed because of their operating flexibility and therefore must provide very easy steps for changing their operating configuration.

US-A-4 278 144 discloses an earth mover, particularly a biditectional earth mover, comprising a chassis, a dashboard and driver post unit, rotatable in order to assume different orientations relative to the earth mover, said unit comprising: a bearing disposed at the rotation centre of the unit rotatably supporting said unit on said chassis about a substantially vertical rotation axis, a dashboard console, a driver post comprising a seat which is pivoted to said dashboard console, and pedals connected to said dashboard console.

The aim of the present invention is to provide a dashboard and driver post unit which allows, because of its structure, to easy change the operating configuration of the machine in which it is installed.

Within the scope of this aim, an object of the present invention is to provide a dashboard and driver post unit which is particularly comfortable for the operator and allows him to have good visibility and effective action on the control means.

Another object of the present invention is to provide a dashboard and driver post unit which can be rotated by the operator.

Another object of the present invention is to provide a dashboard and driver post unit which can be integrated in various bidirectional earth-movers.

This aim, these objects and others which will become apparent hereinafter are achieved by a dashboard and driver post unit, particularly for bidirectional earth-movers, characterized in that it is supported by a center bearing which is in turn rotatably supported so as to have a vertical rotation axis on the chassis of the earth-mover, said driver post comprising a seat which is pivoted to the dashboard and is suitable to swivel up when changing the operating configuration, pedals which can be folded during configuration changing being associated with said dashboard, one or more actuation levers being rigidly coupled to said vehicle chassis and being suitable to assume or maintain positions in which they do not interfere with the movement of said dashboard and driver post unit.

Further characteristics and advantages of the present invention will become apparent from the following detailed description of an embodiment thereof, illustrated only by way of non-limitative example in the accompanying drawings, wherein:
figure 1 is a partially sectional side view of a dashboard and driver post unit according to the invention, installed in a bidirectional earth-mover;
figure 2 is a partially sectional view of a detail of the dashboard and driver post unit of figure 1;
figure 3 is a perspective view of the dashboard of figure 1;
figure 4 is a perspective view of the dashboard and driver post unit of figure 1;
figure 5 is a partially sectional side view of the dashboard and driver post unit of figure 1.

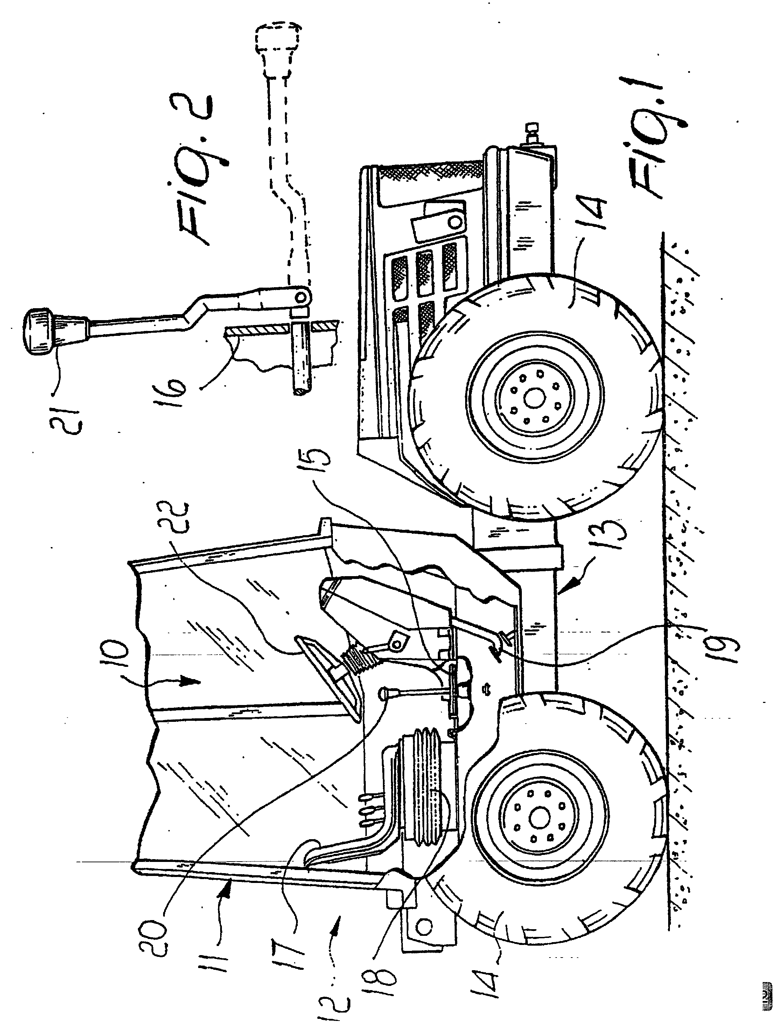

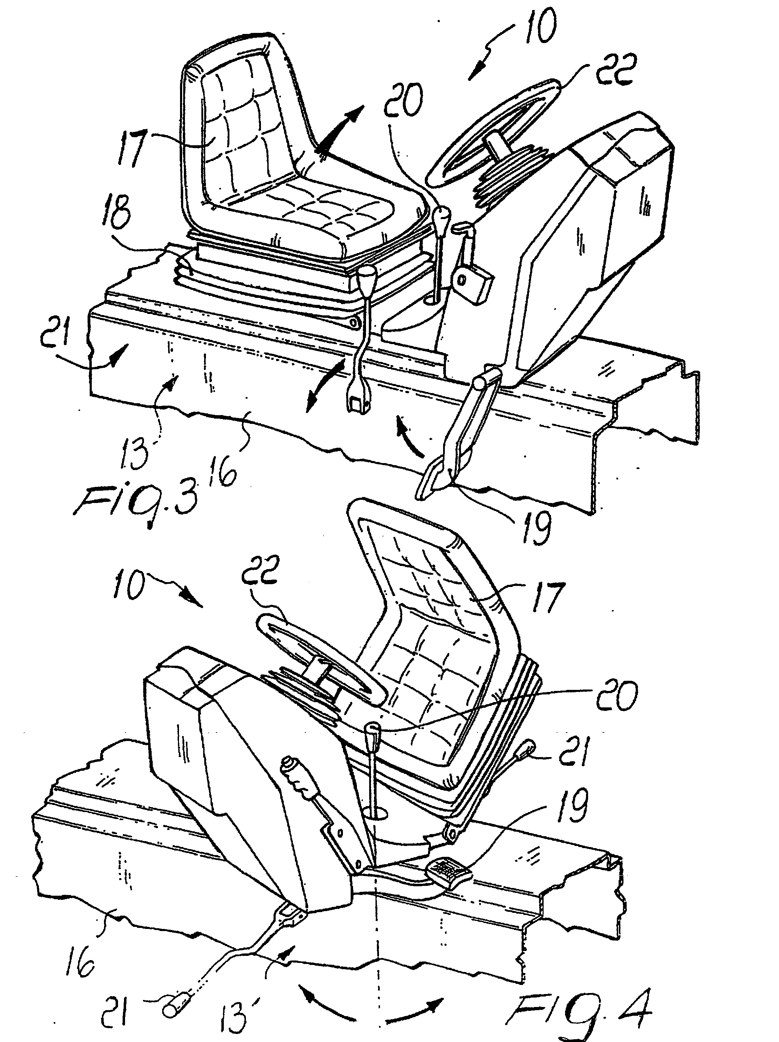

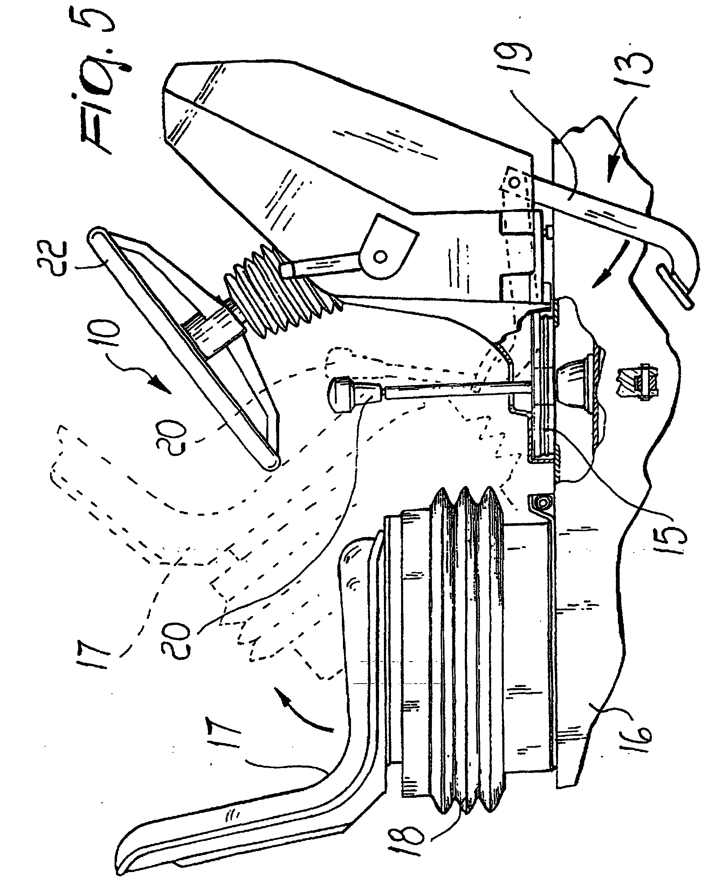

With particular reference to figures 1 to 5, a dashboard and driver post unit, according to the present invention, is generally designated by the reference numeral 10 and is installed in a cabin 11 of a bidirectional earth-mover, generally designated by the reference numeral 12, which is constituted by a chassis 13 with wheels 14.

The dashboard and driver post unit 10 is supported by a center bearing 15 which is in turn rotatably supported, so as to have a vertical rotation axis, by a longitudinal bridge 16 formed by the chassis 13.

The driver post, which is part of the dashboard and driver post unit 10, in this case comprises a seat 17 provided with conventional means for adjusting and cushioning the position, which are not illustrated and are covered by a bellows-like element 18; the seat is pivoted to the dashboard, which is also part of the unit 10.

More specifically, the seat 17 is pivoted about an axis which is substantially perpendicular to the direction of normal travel of the earth-mover 12 and is suitable to swing up when the operating configuration is changed.

Pedals 19, which can be folded so as to avoid interfering with the bridge 16 during changes in the operating configuration, are pivoted in this case to the' dashboard.

Actuation levers are also rigidly coupled to the chassis 13 as described hereinafter.

A gearbox actuation lever, designated by the reference numeral 20, is fixed to the chassis (except for the actuation articulation) along the rotation axis of the unit 10 so that it does not interfere with the movement of said unit.

Two transmission actuation levers 21 are furthermore articulated to the chassis 13, are arranged laterally to the bridge 16 and are suitable to fold out into a position in which they do not interfere with the unit 10 during its movement when changing the operating configuration.

A steering system 22 is also associated with the dashboard and driver post unit.

In practice, it has been observed that the present invention has solved the intended aim and objects.

In particular, it should be noted that the dashboard and driver post unit according to the present invention has a structure whereby it is easy to vary the operating configuration.

Attention is also drawn to the structural simplicity of the unit according to the present invention, which limits its costs and makes it competitive with respect to conventional units.

Attention is also drawn to the structural flexibility of the dashboard and driver post unit according to the present invention, which can be associated with, and applied to, various earth-movers.

The present invention is susceptible of numerous modifications and variations, all of which are within the scope of the inventive concept; accordingly, the details may be replaced with other technically equivalent elements and the materials and the dimensions may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An earth mover, particularly a bidirectional earth mover, comprising:
a chassis (13),
a dashboard and driver post unit (10), rotatable in order to assume different orientations relative to the earth mover,
said unit (10) comprising:
a bearing (15) disposed at the rotation centre of the unit (10) rotatably supporting said unit (10) on said chassis (13) about a substantially vertical rotation axis,
a dashboard console,
a driver post comprising a seat (17) which is pivoted to said dashboard console, and
pedals (19) connected to said dashboard console,
**characterized in that**
the earth mover further comprises at least one actuation lever (21) movably coupled to said chassis (13) so as to assume and/or maintain positions in which it does-not interfere with the rotation of said unit (10), **in that** said seat (17) tilts up during rotation of said unit (10), and **in that** said pedals (19) are foldable during rotation of said unit (10) so as not to obstruct its movement.

2. An earth mover according to claim 1, **characterized in that** said seat (17) has an horizontal tilting axis substantially perpendicular to the normal axis of said earth mover.

3. An earth mover according to claim 1, **characterized in that** said pedals (19) are arranged laterally at said dashboard console and are foldable about an horizontal axis substantially perpendicular to the normal axis of said earth mover.

4. An earth mover according to claim 1, **characterized in that** said at least one actuation lever (21) comprises a gearbox actuation lever (20) which is fixed to the chassis (13) of the earth-mover, except for the actuation articulation, which is arranged along the rotation axis of said unit (10).

5. An earth mover according to claim 1, **characterized in that** said at least one actuation lever (21) comprises two transmission actuation levers (21) which are arranged laterally to the dashboard and to the driver post and are articulated to the chassis (13) so as to swivel outward into a position in which there is no interference with the movement of said dashboard and driver post unit (10).

## Patentansprüche

1. Erdbewegungsmaschine, insbesondere eine Zweirichtungserdbewegungsmaschine mit:
einem Fahrgestell (13),
einer Armaturenbrett- und Fahrerstandeinheit (10), die drehbar ist, um unterschiedliche Ausrichtungen relativ zu der Erdbewegungsmaschine einzunehmen,
wobei die Einheit (10) umfaßt:
ein am Drehzentrum der Einheit (10) angeordnetes Lager (15), das die Einheit (10) um eine im wesentlichen vertikale Drehachse drehbar auf dem Fahrgestell (13) hält,
eine Armaturenbrettkonsole,
einen Fahrerstand mit einem Sitz (17), der gelenkig an der Armaturenbrettkonsole angebracht ist, und
Pedale (19), die mit der Armaturenbrettkonsole verbunden sind,
**dadurch gekennzeichnet, daß**
die Erdbewegungsmaschine ferner zumindest einen Betätigungshebel (21) hat, der beweglich an das Fahrgestell (13) gekoppelt ist, so daß er Stellungen einnimmt und/oder beibehält, in denen er das Drehen der Einheit (10) nicht beeinträchtigt, daß der Sitz (17) während des Drehens der Einheit (10) nach oben kippt, und daß die Pedale (19) während des Drehens der Einheit (10) klappbar sind, um deren Bewegung nicht zu behindern.

2. Erdbewegungsmaschine nach Anspruch 1, **dadurch gekennzeichnet, daß** der Sitz (17) eine horizontale Kippachse hat, die im wesentlichen senkrecht zur Normalachse der Erdbewegungsmaschine ist.

3. Erdbwegungsmaschine nach Anspruch 1, **dadurch gekennzeichnet, daß** die Pedale (19) seitlich an der Armaturenbrettkonsole angeordnet und um eine horizontale Achse klappbar sind, die im wesentlichen senkrecht zur Normalachse der Erdbewegungsmaschine ist.

4. Erdbewegungsmaschine nach Anspruch 1, **dadurch gekennzeichnet, daß** der zumindest eine Betätigungshebel (21) einen Getriebekastenbetätigungshebel (20) umfaßt, der an dem Fahrgestell (13) der Erdbewegungsmaschine befestigt ist, mit Ausnahme des Betätigungsgelenks, das entlang der Drehachse der Einheit (10) angeordnet ist.

5. Erdbewegungsmaschine nach Anspruch 1, **dadurch gekennzeichnet, daß** der zumindest eine Betätigungshebel (21) zwei Getriebebetätigungshebel (21) umfaßt, die seitlich zu dem Armaturenbrett und zu dem Fahrerstand angeordnet und so an dem Fahrgestell (13) angelenkt sind, daß sie nach außen in eine Position schwingen, in der sie die Bewegung der Armaturenbrettund Fahrerstandeinheit (10) nicht beeinträchtigen.

## Revendications

1. Pelle mécanique, en particulier pelle mécanique bidirectionnelle, comprenant :
- un châssis (13),
- un ensemble tableau de bord et poste de conduite (10), pouvant tourner de façon à prendre différentes orientations par rapport à la pelle mécanique,
- ledit ensemble (10) comprenant :
- un support (15) disposé au centre de rotation de l'ensemble (10) supportant de façon rotative ledit ensemble (10) sur ledit châssis (13) autour d'un axe de rotation sensiblement vertical,
- une console de tableau de bord,
- un poste de conduite comprenant un siège (17) qui pivote vis-à-vis de ladite console de tableau de bord, et
- des pédales (19) reliées à ladite console de tableau de bord,
**caractérisée en ce que** la pelle mécanique comprend de plus au moins un levier d'actionnement (21) couplé de façon mobile audit châssis (13) de façon à prendre et/ou conserver des positions dans lesquelles il n'interfère pas avec la rotation dudit ensemble (10), **en ce que** ledit siège (17) bascule vers le haut pendant la rotation dudit ensemble (10), et **en ce que** lesdites pédales (19) peuvent être pliées pendant la rotation dudit ensemble (10) de façon à ne pas gêner son déplacement.

2. Pelle mécanique selon la revendication 1,
**caractérisée en ce que** ledit siège (17) présente un axe de basculement horizontal sensiblement perpendiculaire à l'axe normal de ladite pelle mécanique.

3. Pelle mécanique selon la revendication 1,
**caractérisée en ce que** lesdites pédales (19) sont agencées latéralement sur ladite console de tableau de bord et peuvent être pliées autour d'un axe horizontal sensiblement perpendiculaire à l'axe normal de ladite pelle mécanique.

4. Pelle mécanique selon la revendication 1,
**caractérisée en ce que** ledit levier d'actionnement (21) comprend un levier d'actionnement de boîte de vitesses (20) qui est fixé au châssis (13) de la pelle mécanique, à l'exception de l'articulation d'actionnement, qui est agencée le long de l'axe de rotation dudit ensemble (10).

5. Pelle mécanique selon la revendication 1,
**caractérisée en ce que** ledit levier d'actionnement (21) comprend deux leviers d'actionnement de transmission (21) qui sont agencés latéralement au tableau de bord et au poste de conduite et sont articulés au châssis (13) de façon à basculer extérieurement dans une position dans laquelle il n'existe aucune interférence avec le mouvement dudit ensemble tableau de bord et poste de conduite (10).
